# EUROPÄISCHE PATENTSCHRIFT

(11) **EP 3 301 531 B1**
(45) Veröffentlichungstag und Bekanntmachung des Hinweises auf die Patenterteilung: **01.05.2019**
(21) Anmeldenummer: 17194102.4
(22) Anmeldetag: 29.09.2017
(51) Int. Cl.: G05D 1/00, B60W 50/14

(54) **VERFAHREN ZUM AUTOMATISIERTEN FÜHREN EINES KRAFTFAHRZEUGS**
METHOD FOR THE AUTOMATED DRIVING OF A MOTOR VEHICLE
PROCÉDÉ DE CONDUITE AUTOMATIQUE D'UN VÉHICULE AUTOMOBILE

(30) Priorität: 30.09.2016 DE 102016218985
(43) Veröffentlichungstag der Anmeldung: 04.04.2018
(73) Patentinhaber: Continental Automotive GmbH, 30165 Hannover (DE)
(72) Erfinder: Meier-Arendt, Guido, 63225 Langen (DE); Cieler, Stephan, 60316 Frankfurt (DE); von Bychowski, Heidi, 61352 Bad Homburg (DE); Mathe, Benjamin, 55118 Mainz (DE)

(56) Entgegenhaltungen:
- EP-A1- 3 050 771
- DE-A1-102015 205 580
- US-A1- 2015 094 899

## Beschreibung

Die Erfindung bezieht sich auf ein Verfahren zum automatisierten Führen eines mit einem Fahrer besetzten Kraftfahrzeugs, wobei während des automatisierten Führens des Kraftfahrzeugs eine Fahraufgabeübernahmeaufforderung an den Fahrer erfolgt. Außerdem betrifft die Erfindung ein Fahrzeugführungssystem.

Es sind bereits verschiedene Verfahren zum automatisierten Führen von mit einem Fahrer besetzten Kraftfahrzeugen bekannt. Dabei ist es bekannt, die Verfahren nach ihrem Automatisierungsgrad zu unterscheiden, wobei die Verfahren beispielsweise in die vier Kategorien hochautomatisiertes Führen, vollautomatisiertes Führen, teilautomatisiertes Führen sowie assistiertes Führen des Kraftfahrzeugs eingeteilt werden.

Gemäß einer solchen Kategorisierung übernimmt bei einem Verfahren zum hochautomatisierten Führen eines Kraftfahrzeugs ein Fahrerassistenzsystem die Quer- und Längsführung des Kraftfahrzeugs für einen gewissen Zeitraum in spezifischen Situationen. Bei einem Verfahren zum vollautomatisierten Führen eines Kraftfahrzeugs übernimmt ein Fahrerassistenzsystem die Quer- und Längsführung des Kraftfahrzeugs vollständig in einem definierten Anwendungsfall. Im Falle des vollautomatisierten Führens fordert das Fahrerassistenzsystem vor dem Verlassen des Anwendungsfalles den Fahrer mit ausreichender Zeitreserve zur Übernahme einer Fahraufgabe, also des Führens des Kraftfahrzeugs, auf. Im Falle des hochautomatisierten Führens erfolgt die Übernahmeaufforderung bei Bedarf und mit ausreichender Zeitreserve. Zur Übernahme der Fahraufgabe muss der Fahrer in beiden Fällen, das heißt sowohl beim hochautomatisierten Führen als auch beim vollautomatisierten Führen des Kraftfahrzeugs mittels des Fahrerassistenzsystems, jeweils übernahmebereit sein. Das hoch - oder vollautomatisierte Führen des Kraftfahrzeugs wird auch als Führen des Kraftfahrzeugs mit einer höheren Automatisierungsstufe bezeichnet.

In beiden vorgenannten Fällen, dem hochautomatisierten Führen und dem vollautomatisierten Führen des Kraftfahrzeugs, muss der Fahrer das Fahrerassistenzsystem nicht überwachen. Im Gegensatz dazu muss der Fahrer bei Verfahren mit einem niedrigeren Automatisierungsgrad, nämlich einem Verfahren zum teilautomatisierten Führen des Kraftfahrzeugs mittels eines Fahrerassistenzsystems oder einem Verfahren zum nur assistierten Führen des Kraftfahrzeugs mittels eines Fahrerassistenzsystems, das Fahrerassistenzsystem dauerhaft überwachen. Sowohl beim teilautomatisierten Führen des Kraftfahrzeugs mittels eines Fahrerassistenzsystems als auch beim nur assistierten Führen eines Kraftfahrzeugs mittels eines Fahrerassistenzsystems muss der Fahrer jederzeit zur vollständigen Übernahme der Fahrzeugführung bereit sein.

Zur Übernahme einer Fahraufgabe durch den Fahrer ist es nicht nur von Bedeutung, dass der Fahrer in der Lage ist, die Übernahme und Durchführung der Fahraufgabe zu bewältigen, sondern auch, dass eine Aufforderung an den Fahrer, die Fahraufgabe zu übernehmen, dem Fahrer verlässlich mitgeteilt wird.

Das Dokument US 2015/0094899 A1 offenbart den Oberbegriff des Anspruchs 1 und beschreibt ein Verfahren für ein Fahrerassistenzsystem eines Fahrzeugs. Das Fahrerassistenzsystem ist in der Lage, das Fahrzeug zumindest teilweise automatisch zu steuern. Bei dem Verfahren wird ein Endes eines Autopilotstreckenabschnitts in einem für das Fahrzeug geplanten Streckenverlauf bestimmt und eine Abstandsinformation zwischen einer aktuellen Position des Fahrzeugs und dem Ende des Autopilotstreckenabschnitts bestimmt. Die Abstandsinformation wird mit einem ersten Schwellenwert verglichen und in Abhängigkeit davon eine erste Hinweisinformation ausgegeben. Die Abstandsinformation wird ferner mit einem zweiten Schwellenwert verglichen und in Abhängigkeit davon wird eine zweite Hinweisinformation ausgegeben.

Der Erfindung liegt die Aufgabe zugrunde, ein Verfahren und ein Fahrzeugführungssystem der eingangs genannten Art anzugeben, die eine zuverlässige Übermittlung der Fahraufgabeübernahmeaufforderung bieten.

Diese Aufgabe wird erfindungsgemäß dadurch gelöst, dass ein Tätigkeitstyp einer von dem Fahrer ausgeführten Tätigkeit erfasst wird, dass in Abhängigkeit von dem erfassten Tätigkeitstyp eine erste Informationsausgabemodalität zum Ausgeben der Fahraufgabeübernahmeaufforderung ausgewählt wird, dass die Fahraufgabeübernahmeaufforderung an den Fahrer in der ausgewählten ersten Informationsausgabemodalität und räumlich ungerichtet erfolgt, dass nachfolgend die Fahraufgabeübernahmeaufforderung in der ausgewählten ersten Informationsausgabemodalität und räumlich gerichtet auf den Fahrer erfolgt und dass gleichzeitig die Fahraufgabeübernahmeaufforderung an den Fahrer in einer von der ersten Informationsausgabemodalität verschiedenen zweiten Informationsausgabemodalität erfolgt.

Bei dem erfindungsgemäßen Verfahren wird somit in Abhängigkeit einer Tätigkeit, die der Fahrer ausführt, während das Kraftfahrzeug automatisiert geführt wird, dem Fahrer gestuft und auf unterschiedliche Arten mitgeteilt, dass er eine Fahraufgabe übernehmen soll. Für die unterschiedlichen Arten, auf welche die Mitteilung erfolgt, werden sich unterscheidende Informationsausgabemodalitäten genutzt. Somit können vorteilhaft unterschiedliche Wahrnehmungskanäle des Fahrers angesprochen und genutzt werden.

Eine Informationsausgabemodalität gibt an, in welcher Art und Weise eine Information ausgegeben wird. Zum Beispiel kann eine Informationsausgabemodalität eine akustische Informationsausgabe aufweisen. Eine andere, von der vorgenannten Informationsausgabemodalität verschiedene Informationsausgabemodalität kann beispielsweise eine optische Informationsausgabe aufweisen. Eine wieder andere, sich von den beiden vorgenannten Informationsausgabemodalitäten unterscheidende Informationsausgabemodalität kann zum Beispiel eine haptische Informationsausgabe aufweisen. Die drei vorgenannten beispielhaften Informationsausgabemodalitäten unterscheiden sich darin, dass sie jeweils eine akustische Informationsausgabe beziehungsweise eine optische Informationsausgabe beziehungsweise eine haptische Informationsausgabe aufweisen. Die Informationsausgabemodalitäten können sich vorteilhaft hinsichtlich des jeweils angesprochenen menschlichen Wahrnehmungskanals (beispielsweise optisch oder akustisch oder haptisch) unterscheiden.

Für das erfindungsgemäße Verfahren ist weiterhin von Bedeutung, dass der Tätigkeitstyp der Tätigkeit, die der Fahrer während des automatisierten Führens des Kraftfahrzeugs ausführt und die man im Hinblick auf die als Haupttätigkeit durch den Fahrer zu übernehmende Fahraufgabe auch als Nebentätigkeit bezeichnen kann, erfasst wird. Das Erfassen des Tätigkeitstyps erfolgt - ebenso wie das Auswählen der Informationsausgabemodalität - vorzugsweise durch ein Fahrerassistenzsystem, insbesondere ein Fahrzeugführungssystem, des Kraftfahrzeugs.

Beispielsweise kann der Tätigkeitstyp eine visuelle Tätigkeit des Fahrers angeben. Eine solche visuelle Tätigkeit kann zum Beispiel vorliegen, wenn der Fahrer ein Buch liest. Ein anderer Tätigkeitstyp kann zum Beispiel eine akustische oder auditive Tätigkeit des Fahrers angeben. Eine solche akustische oder auditive Tätigkeit kann zum Beispiel vorliegen, wenn sich der Fahrer ein Hörbuch anhört. Das Erfassen des Tätigkeitstyps kann beispielsweise mittels einer Innenraumkamera und eines Innenraummikrofons des Kraftfahrzeugs erfolgen. Entscheidend ist dabei die Tätigkeit, die der Fahrer hauptsächlich oder überwiegend ausführt.

Von besonderem Vorteil ist bei der Erfindung zudem, dass die Fahraufgabeübernahmeaufforderung an den Fahrer zunächst räumlich ungerichtet, das heißt den Fahrer umgebend, und danach räumlich gerichtet, das heißt zum Beispiel ausgehend von einem potentiellen Kollisionsobjekt im Umfeld des Kraftfahrzeugs und gerichtet auf den Fahrer, sowie gleichzeitig zu Letzterem in einer abweichenden Informationsausgabemodalität erfolgt. Damit erfolgt die Fahraufgabeübernahmeaufforderung an den Fahrer gestuft unterschiedliche Wahrnehmungskanäle des Fahrers ansprechend. Auf diese Weise kann eine hohe Aufmerksamkeit des Fahrers bezüglich der Fahraufgabeübernahmeaufforderung und somit auch eine besonders zuverlässige Informationsübermittlung erreicht werden.

Wichtig ist bei der Erfindung, dass die Fahraufgabeübernahmeaufforderung an den Fahrer in zwei verschiedenen Informationsausgabemodalitäten erfolgt. Die Fahraufgabeübernahmeaufforderung erfolgt zunächst in der ersten Informationsausgabemodalität und räumlich ungerichtet, dann in der ersten Informationsausgabemodalität und räumlich gerichtet und gleichzeitig in der zweiten Informationsausgabemodalität, wobei es auch denkbar ist, dass in einem weiteren, anschließenden Verfahrensschritt die Fahraufgabeübernahmeaufforderung nur noch in der zweiten Informationsausgabemodalität erfolgt.

Die Erfindung trägt vorteilhaft dazu bei, dass verhindert wird, dass von dem Fahrer eine Aufforderung zur Übernahme einer Fahraufgabe aufgrund von Nebentätigkeiten, die er ausführt, nicht wahrgenommen oder nicht zutreffend interpretiert wird. Damit kann auch das Sicherheitsgefühl des Fahrers und seine Akzeptanz des automatisierten Führens des Kraftfahrzeugs gesteigert werden.

Die Fahraufgabeübernahmeaufforderung, das heißt die Aufforderung an den Fahrer, eine Fahraufgabe selbst zu übernehmen, erfolgt durch das Fahrerassistenzsystem, insbesondere das Fahrzeugführungssystem, des Kraftfahrzeugs, welches Fahrerassistenzsystem das Kraftfahrzeug automatisiert führt.

Zusätzliche vorteilhafte Weiterbildungen der Erfindung sind in den Unteransprüchen angegeben.

Man könnte sich vorstellen, dass die Änderung von der räumlich ungerichteten zu der räumlich gerichteten Fahraufgabeübernahmeaufforderung sprunghaft erfolgt. Ein besonders kontinuierlicher Informationsfluss, der den Fahrer in seiner Wahrnehmung der Fahraufgabeübernahmeaufforderung zum Beispiel behutsam leiten kann, kann hingegen erreicht werden, wenn gemäß einer vorteilhaften Weiterbildung der Erfindung die räumlich gerichtete Fahraufgabeübernahmeaufforderung in der ausgewählten ersten Informationsausgabemodalität fließend erfolgt ausgehend von einer ersten Raumrichtung hin zu einer zweiten Raumrichtung, aus welcher zweiten Raumrichtung die Fahraufgabeübernahmeaufforderung in der zweiten Informationsausgabemodalität erfolgt. Die erste Raumrichtung kann beispielsweise ausgehend von einem potentiellen Kollisionsobjekt im Umfeld des Kraftfahrzeugs auf den Fahrer gerichtet sein. Die zweite Raumrichtung kann beispielsweise ausgehend von einem Bildschirm in einem Kombinationsanzeigeinstrument des Kraftfahrzeugs, mittels welchen Bildschirms die Fahraufgabeübernahmeaufforderung an den Fahrer in der zweiten Informationsausgabemodalität erfolgt, auf den Fahrer gerichtet sein. Somit kann die Fahraufgabeübernahmeaufforderung in der ersten Informationsausgabemodalität räumlich gerichtet, aber aus sich ändernder Raumrichtung, den Fahrer leitend, erfolgen.

Gemäß einer anderen vorteilhaften Weiterbildung der Erfindung wird bei zwei erfassten verschiedenartigen Tätigkeitstypen von von dem Fahrer ausgeführten Tätigkeiten in Abhängigkeit von dem jeweiligen Tätigkeitstyp jeweils eine erste Informationsausgabemodalität ausgewählt, und die Fahraufgabeübernahmeaufforderung erfolgt an den Fahrer gleichzeitig in den beiden ausgewählten ersten Informationsausgabemodalitäten und räumlich ungerichtet. So kann im Falle von zwei erfassten unterschiedlichen Tätigkeitstypen die Fahraufgabeübernahmeaufforderung zum Beispiel gleichzeitig als Raumklang und als Raumfarbillumination im Innenraum des Kraftfahrzeugs erfolgen.

Es wäre denkbar, für die nachfolgende räumlich gerichtete Fahraufgabeübernahmeaufforderung lediglich eine der beiden ersten Informationsausgabemodalitäten vorzusehen. Vorteilhaft ist es hingegen, wenn gemäß einer Weiterbildung der Erfindung nachfolgend die Fahraufgabeübernahmeaufforderung in den beiden ausgewählten ersten Informationsausgabemodalitäten und jeweils räumlich gerichtet auf den Fahrer erfolgt.

Die zweite Informationsausgabemodalität ist zumindest verschieden von einer der beiden ersten Informationsausgabemodalitäten. Gemäß einer vorteilhaften Weiterbildung der Erfindung ist die zweite Informationsausgabemodalität verschieden von den beiden ersten Informationsausgabemodalitäten. Bei einer solchen Ausgestaltung des erfindungsgemäßen Verfahrens werden mithin drei verschiedene Informationsausgabemodalitäten verwendet.

Man könnte sich vorstellen, dass die zweite Informationsausgabemodalität eine beliebige Informationsausgabemodalität ist, die sich von der ersten Informationsausgabemodalität unterscheidet. Hingegen wird gemäß einer vorteilhaften Weiterbildung der Erfindung ein Fahrkontext erfasst, und in Abhängigkeit von dem erfassten Fahrkontext wird die zweite Informationsausgabemodalität ausgewählt. Durch die Berücksichtigung des Fahrkontextes, das heißt der Fahrsituation und des Fahrtzustandes, in denen sich das Kraftfahrzeug und der Fahrer des Kraftfahrzeugs befinden, kann vorteilhaft eine bestmögliche Anpassung der Informationsausgabe für eine sichere und umfängliche Übermittlung der Fahraufgabeübernahmeaufforderung an den Fahrer erfolgen. Das Erfassen des Fahrkontextes und das Auswählen der zweiten Informationsausgabemodalität erfolgt vorzugsweise durch das Fahrerassistenzsystem, insbesondere das Fahrzeugführungssystem.

Eine besonders zuverlässige Übermittlung der Fahraufgabeübernahmeaufforderung kann dadurch erreicht werden, dass gemäß einer vorteilhaften Weiterbildung der Erfindung zu einem eine visuelle Tätigkeit angebenden Tätigkeitstyp eine eine akustische Informationsausgabe aufweisende Informationsausgabemodalität ausgewählt wird.

Gemäß einer anderen vorteilhaften Weiterbildung der Erfindung wird zu einem eine akustische Tätigkeit angebenden Tätigkeitstyp eine eine visuelle Informationsausgabe aufweisende Informationsausgabemodalität oder eine eine haptische Informationsausgabe aufweisende Informationsausgabemodalität ausgewählt. Auch hierdurch kann eine besonders zuverlässige Übermittlung der Fahraufgabeübernahmeaufforderung an den Fahrer erreicht werden.

Die oben genannte Aufgabe wird zudem gelöst mit einem Fahrzeugführungssystem eines Kraftfahrzeugs zum automatisierten Führen des Kraftfahrzeugs, wobei das Fahrzeugführungssystem ausgebildet ist zum Durchführen eines erfindungsgemäßen Verfahrens. Mittels des Fahrzeugführungssystems wird das Kraftfahrzeug zum einen automatisiert geführt, zum anderen erfolgt auch die Fahraufgabeübernahmeaufforderung mittels des Fahrzeugführungssystems. Das Fahrzeugführungssystem ist in dem Kraftfahrzeug angeordnet und Bestandteil des Kraftfahrzeugs.

Ausführungsbeispiele der Erfindung sind in der Zeichnung dargestellt und werden im Folgenden näher beschrieben. Es zeigen
- Figur 1: ein Ablaufschema für ein Verfahren zum automatisierten Führen eines Kraftfahrzeugs und
- Figur 2: einen Fahrkontext des Kraftfahrzeugs.

Sich jeweils entsprechende Elemente sind in allen Figuren mit gleichen Bezugszeichen versehen.

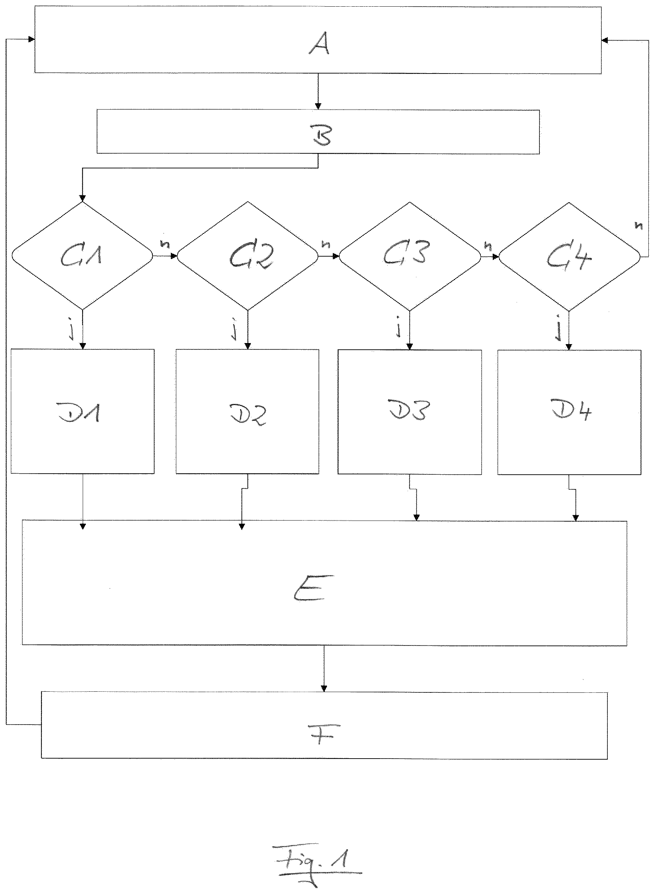

In Figur 1 ist ein Ablaufschema für ein Verfahren zum automatisierten Führen eines mit einem Fahrer besetzten Kraftfahrzeugs gezeigt. Bei dem Verfahren erfolgt während des automatisierten Führens des Kraftfahrzeugs eine Fahraufgabeübernahmeaufforderung an den Fahrer.

Ein in Figur 1 oben angeordnetes erstes Feld A steht für einen Start des Verfahrens. Das Kraftfahrzeug wird dabei mittels eines als Fahrzeugführungssystem ausgebildeten Fahrerassistenzsystems automatisiert geführt.

In einem dem Feld A nachfolgenden Operationsfeld B wird ein Tätigkeitstyp einer von dem Fahrer ausgeführten Tätigkeit erfasst. In Figur 1 ist ferner zu erkennen, dass dem Operationsfeld B vier Entscheidungsfelder C1, C2, C3, C4 nachgeordnet sind. In diesen Entscheidungsfeldern C1, C2, C3, C4 wird in Abhängigkeit von dem erfassten Tätigkeitstyp eine erste Informationsausgabemodalität zum Ausgeben der Fahraufgabeübernahmeaufforderung an den Fahrer ausgewählt.

An die vier Entscheidungsfelder C1, C2, C3, C4 schließt sich jeweils eines von vier parallelen Operationsfeldern D1, D2, D3, D4 an. In diesen Operationsfeldern D1, D2, D3, D4 erfolgt die Fahraufgabeübernahmeaufforderung an den Fahrer in der jeweils ausgewählten ersten Informationsausgabemodalität und räumlich ungerichtet.

In dem Ablaufschema bedeutet eine Bezeichnung "j" neben einem Pfeil ein "Ja" einer Entscheidung, eine Bezeichnung "n" bedeutet ein "Nein" einer Entscheidung.

In einem ersten dem oben erstgenannten Operationsfeld B nachfolgenden Entscheidungsfeld C1 der vier vorgenannten Entscheidungsfelder C1, C2, C3, C4 wird geprüft, ob es sich bei dem erfassten Tätigkeitstyp um einen eine visuelle Tätigkeit, zum Beispiel Lesen, angebenden Tätigkeitstyp handelt. Ist das der Fall, so wird das Verfahren in einem nachfolgenden ersten Operationsfeld D1 der vier vorgenannten parallelen Operationsfelder D1, D2, D3, D4 fortgesetzt.

In diesem Operationsfeld D1 erfolgt die Fahraufgabeübernahmeaufforderung in einer eine akustische Informationsausgabe aufweisenden Informationsausgabemodalität und den Fahrer umgebend unspezifisch, das heißt räumlich ungerichtet. Zum Beispiel werden hierzu Klangereignisse, die den Fahrer über einen Winkel von 360° umgeben, beispielsweise in der Art einer Klangwolke, ausgegeben.

Handelt es sich nicht um einen eine visuelle Tätigkeit angebenden Tätigkeitstyp, so wird in einem weiteren Entscheidungsfeld C2 der oben genannten vier Entscheidungsfelder C1, C2, C3, C4 geprüft, ob es sich bei dem erfassten Tätigkeitstyp um einen eine akustische Tätigkeit, zum Beispiel das Hören von beispielsweise Musik über Kopfhörer, angebenden Tätigkeitstyp handelt. Ist das der Fall, so wird das Verfahren in einem nachfolgenden zweiten Operationsfeld D2 der vier vorgenannten parallelen Operationsfelder D1, D2, D3, D4 fortgesetzt.

In diesem Operationsfeld D2 erfolgt die Fahraufgabeübernahmeaufforderung in einer eine visuelle Informationsausgabe aufweisenden Informationsausgabemodalität und den Fahrer umgebend räumlich ungerichtet. Zum Beispiel wird hierzu der Fahrzeuginnenraum in ein farbiges Licht getaucht, und/oder eine Anzeigefarbe eines Kombinationsanzeigeinstruments des Kraftfahrzeugs ändert sich zum Beispiel.

Handelt es sich auch nicht um einen eine akustische Tätigkeit angebenden Tätigkeitstyp, so wird in einem weiteren Entscheidungsfeld C3 der vier oben genannten Entscheidungsfelder C1, C2, C3, C4 geprüft, ob es sich bei dem erfassten Tätigkeitstyp um einen eine motorische Tätigkeit, zum Beispiel Essen, angebenden Tätigkeitstyp handelt. Ist das der Fall, so wird das Verfahren in einem nachfolgenden dritten Operationsfeld D3 der vier vorgenannten parallelen Operationsfelder D1, D2, D3, D4 fortgesetzt.

In diesem Operationsfeld D3 erfolgt die Fahraufgabeübernahmeaufforderung in einer eine haptische oder kinästhetische Informationsausgabe aufweisenden Informationsausgabemodalität und den Fahrer umgebend räumlich ungerichtet. Zum Beispiel wird hierzu ein Fahrersitz des Kraftfahrzeugs in Vibrationen versetzt, und/oder ein Gurtstraffer eines Fahrersicherheitsgurtes wird angezogen, und/oder das Kraftfahrzeug wird insgesamt in eine (sehr) kurze, aber für den Fahrer auffällige, Schwingung versetzt.

Handelt es sich auch nicht um einen eine akustische Tätigkeit angebenden Tätigkeitstyp, so wird in einem weiteren Entscheidungsfeld C4 der vier oben genannten Entscheidungsfelder C1, C2, C3, C4 geprüft, ob es sich um verschiedenartige Tätigkeitstypen handelt, die unterschiedliche Tätigkeiten des Fahrers angeben. Ein Beispiel dafür ist das Schreiben eines Textes auf einem Smartphone, wobei von dem Fahrer sowohl eine motorische als auch eine visuelle Tätigkeit ausgeführt wird. Im Falle von erfassten verschiedenartigen Tätigkeitstypen wird das Verfahren dann in einem nachfolgenden vierten Operationsfeld D4 der vier vorgenannten parallelen Operationsfelder D1, D2, D3, D4 fortgesetzt.

In diesem Operationsfeld D4 erfolgt die Fahraufgabeübernahmeaufforderung an den Fahrer gleichzeitig in einer eine haptische oder kinästhetische Informationsausgabe aufweisenden Informationsausgabemodalität und in einer eine akustische Informationsausgabe aufweisenden Informationsausgabemodalität und den Fahrer umgebend ungerichtet. Zum Beispiel wird hierzu der Fahrersitz in Vibrationen versetzt und eine Klangwolke ausgegeben.

Handelt es sich auch nicht um verschiedenartige Tätigkeitstypen, so wird das Verfahren in dem ersten Feld A fortgesetzt und neu gestartet.

Wurde eines der vier vorgenannten, parallelen Operationsfelder D1, D2, D3, D4 durchlaufen, so wird das Verfahren in einem nachfolgenden Operationsfeld E fortgesetzt. In diesem Operationsfeld E erfolgt die Fahraufgabeübernahmeaufforderung in der ausgewählten ersten Informationsausgabemodalität (siehe vorgeschaltete Operationsfelder D1, D2, D3, D4), jetzt aber räumlich gerichtet auf den Fahrer, und gleichzeitig erfolgt die Fahraufgabeübernahmeaufforderung an den Fahrer in einer von der ersten Informationsausgabemodalität verschiedenen zweiten Informationsausgabemodalität. Für die zweite Informationsausgabemodalität wird mittels des Fahrerassistenzsystems ein Fahrkontext erfasst, und in Abhängigkeit von dem erfassten Fahrkontext wird die zweite Informationsausgabemodalität ausgewählt.

Nachfolgend wird das Verfahren in einem Feld F beendet und anschließend in dem ersten Feld A neu gestartet.

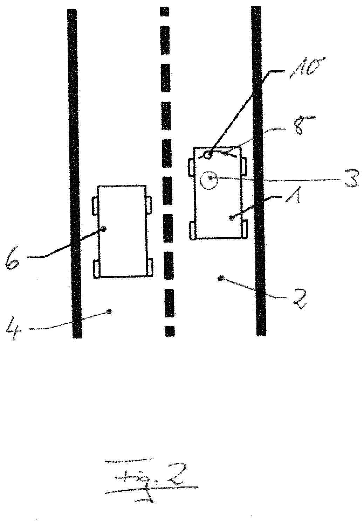

Figur 2 zeigt beispielhaft einen Fahrkontext eines automatisiert geführten und mit einem Fahrer 3 besetzten Kraftfahrzeugs 1, das auf einer ersten Fahrspur 2 einer Straße fährt. Auf einer an die erste Fahrspur 2 angrenzenden zweiten Fahrspur 4 fährt in einem unmittelbaren Verkehrsumfeld des automatisiert geführten Kraftfahrzeugs 1 ein weiteres Kraftfahrzeug 6. Das weitere Kraftfahrzeug 6 stellt für das erstgenannte Kraftfahrzeug 1 ein potentielles Kollisionsobjekt dar.

Mittels eines Leuchtbandes 8, das zum Beispiel ein Leuchtdioden-Leuchtband sein kann, erfolgt in dem automatisiert geführten Kraftfahrzeug 1 eine Fahraufgabeübernahmeaufforderung an den Fahrer 3 in einer eine visuelle Informationsausgabe aufweisenden Informationsausgabemodalität und räumlich ungerichtet. Mittels eines hervorgehobenen Leuchtpunktes 10 des Leuchtbandes 8 erfolgt die Fahraufgabeübernahmeaufforderung in der eine visuelle Informationsausgabe aufweisenden Informationsausgabemodalität an den Fahrer 3 nachfolgend räumlich gerichtet auf den Fahrer 3.

## Patentansprüche

1. Verfahren zum automatisierten Führen eines mit einem Fahrer (3) besetzten Kraftfahrzeugs (1), wobei während des automatisierten Führens des Kraftfahrzeugs (1) eine Fahraufgabeübernahmeaufforderung an den Fahrer (3) erfolgt, wobei ein Tätigkeitstyp einer von dem Fahrer (3) ausgeführten Tätigkeit erfasst wird, **dadurch gekennzeichnet, dass** in Abhängigkeit von dem erfassten Tätigkeitstyp eine erste Informationsausgabemodalität zum Ausgeben der Fahraufgabeübernahmeaufforderung ausgewählt wird, dass die Fahraufgabeübernahmeaufforderung an den Fahrer (3) in der ausgewählten ersten Informationsausgabemodalität und räumlich ungerichtet erfolgt,
dass nachfolgend die Fahraufgabeübernahmeaufforderung in der ausgewählten ersten Informationsausgabemodalität und räumlich gerichtet auf den Fahrer (3) erfolgt und dass gleichzeitig die Fahraufgabeübernahmeaufforderung an den Fahrer (3) in einer von der ersten Informationsausgabemodalität verschiedenen zweiten Informationsausgabemodalität erfolgt.

2. Verfahren nach Anspruch 1, **dadurch gekennzeichnet, dass** die räumlich gerichtete Fahraufgabeübernahmeaufforderung in der ausgewählten ersten Informationsausgabemodalität fließend erfolgt ausgehend von einer ersten Raumrichtung hin zu einer zweiten Raumrichtung, aus welcher zweiten Raumrichtung die Fahraufgabeübernahmeaufforderung in der zweiten Informationsausgabemodalität erfolgt.

3. Verfahren nach Anspruch 1 oder 2, **dadurch gekennzeichnet, dass** bei zwei erfassten verschiedenartigen Tätigkeitstypen von von dem Fahrer (3) ausgeführten Tätigkeiten in Abhängigkeit von dem jeweiligen Tätigkeitstyp jeweils eine erste Informationsausgabemodalität ausgewählt wird und dass die Fahraufgabeübernahmeaufforderung an den Fahrer (3) gleichzeitig in den beiden ausgewählten ersten Informationsausgabemodalitäten und räumlich ungerichtet erfolgt.

4. Verfahren nach Anspruch 3, **dadurch gekennzeichnet, dass** nachfolgend die Fahraufgabeübernahmeaufforderung in den beiden ausgewählten ersten Informationsausgabemodalitäten und jeweils räumlich gerichtet auf den Fahrer (3) erfolgt.

5. Verfahren nach Anspruch 3 oder 4, **dadurch gekennzeichnet, dass** die zweite Informationsausgabemodalität verschieden von den beiden ersten Informationsausgabemodalitäten ist.

6. Verfahren nach einem der vorhergehenden Ansprüche, **dadurch gekennzeichnet, dass** ein Fahrkontext erfasst wird und dass in Abhängigkeit von dem erfassten Fahrkontext die zweite Informationsausgabemodalität ausgewählt wird.

7. Verfahren nach einem der vorhergehenden Ansprüche, **dadurch gekennzeichnet, dass** zu einem eine visuelle Tätigkeit angebenden Tätigkeitstyp eine eine akustische Informationsausgabe aufweisende Informationsausgabemodalität ausgewählt wird.

8. Verfahren nach einem der vorhergehenden Ansprüche, **dadurch gekennzeichnet, dass** zu einem eine akustische Tätigkeit angebenden Tätigkeitstyp eine eine visuelle Informationsausgabe aufweisende Informationsausgabemodalität oder eine eine haptische Informationsausgabe aufweisende Informationsausgabemodalität ausgewählt wird.

9. Fahrzeugführungssystem eines Kraftfahrzeugs (1) zum automatisierten Führen des Kraftfahrzeugs (1), wobei das Fahrzeugführungssystem ausgebildet ist zum Durchführen eines Verfahrens nach einem der vorhergehenden Ansprüche.

## Claims

1. Method for the automated driving of a motor vehicle (1) occupied by a driver (3), wherein a request to take over the driving task is given to the driver (3) during the automated driving of the motor vehicle (1), wherein
an activity type of an activity carried out by the driver (3) is captured,
**characterized**
**in that** a first information output modality for outputting the request to take over the driving task is selected on the basis of the captured activity type,
**in that** the request to take over the driving task is given to the driver (3) in the selected first information output modality and in a spatially undirected manner,
**in that** the request to take over the driving task is subsequently given to the driver (3) in the selected first information output modality and in a spatially directed manner, and
**in that** the request to take over the driving task is simultaneously given to the driver (3) in a second information output modality which differs from the first information output modality.

2. Method according to Claim 1, **characterized in that** the spatially directed request to take over the driving task is given in the selected first information output modality in a flowing manner starting from a first spatial direction to a second spatial direction, from which second spatial direction the request to take over the driving task is given in the second information output modality.

3. Method according to Claim 1 or 2, **characterized in that**, if two different activity types of activities carried out by the driver (3) are captured, a first information output modality is respectively selected on the basis of the respective activity type, and **in that** the request to take over the driving task is simultaneously given to the driver (3) in the two selected first information output modalities and in a spatially undirected manner.

4. Method according to Claim 3, **characterized in that** the request to take over the driving task is subsequently given to the driver (3) in the two selected first information output modalities and in a spatially directed manner in each case.

5. Method according to Claim 3 or 4, **characterized in that** the second information output modality differs from the two first information output modalities.

6. Method according to one of the preceding claims, **characterized in that** a driving context is captured, and **in that** the second information output modality is selected on the basis of the captured driving context.

7. Method according to one of the preceding claims, **characterized in that**, for an activity type indicating a visual activity, an information output modality having acoustic information output is selected.

8. Method according to one of the preceding claims, **characterized in that**, for an activity type indicating an acoustic activity, an information output modality having visual information output or an information output modality having haptic information output is selected.

9. Vehicle driving system of a motor vehicle (1) for the automated driving of the motor vehicle (1), wherein the vehicle driving system is designed to carry out a method according to one of the preceding claims.

## Revendications

1. Procédé de conduite automatique d'un véhicule automobile (1) occupé par un conducteur (3), dans lequel, pendant la conduite automatique du véhicule automobile (1), une demande de reprise des tâches de conduite est adressée au conducteur (3), dans lequel un type d'activité d'une activité effectuée par le conducteur (3) est détecté,
**caractérisé en ce qu'**une première modalité d'émission d'informations pour émettre la demande de reprise des tâches de conduite est sélectionnée en fonction du type d'activité détecté,
**en ce que** la demande de reprise des tâches de conduite adressée au conducteur (3) est effectuée dans la première modalité d'émission d'informations sélectionnée et de manière non orientée spatialement,
**en ce que** la demande de reprise des tâches de conduite est ensuite effectuée dans la première modalité d'émission d'informations sélectionnée et de manière orientée spatialement vers le conducteur (3) et
**en ce que** la demande de reprise des tâches de conduite adressée au conducteur (3) est effectuée simultanément dans une seconde modalité d'émission d'informations qui est différente de la première modalité d'émission d'informations.

2. Procédé selon la revendication 1, **caractérisé en ce que** la demande de reprise des tâches de conduite orientée spatialement est effectuée de manière fluide dans la première modalité d'émission d'informations sélectionnée, depuis une première orientation spatiale vers une seconde orientation spatiale, seconde direction spatiale à partir de laquelle la demande de reprise des tâches de conduite est effectuée dans la seconde modalité d'émission d'informations.

3. Procédé selon la revendication 1 ou 2, **caractérisé en ce que**, dans le cas où deux types d'activité différents sont détectés, une première modalité d'émission d'informations est respectivement sélectionnée parmi les activités effectuées par le conducteur (3) en fonction du type d'activité respectif et **en ce que** la demande de reprise des tâche de conduite adressée au conducteur (3) est effectuée simultanément dans les deux premières modalités d'émission d'informations sélectionnées et de manière non orientée spatialement.

4. Procédé selon la revendication 3, **caractérisé en ce que** la demande de reprise des tâches de conduite est ensuite effectuée dans les deux premières modalités d'émission d'informations sélectionnées et dans chaque cas de manière orientée spatialement vers le conducteur (3).

5. Procédé selon la revendication 3 ou 4, **caractérisé en ce que** la seconde modalité d'émission d'informations est différente des deux premières modalités d'émission d'informations.

6. Procédé selon l'une des revendications précédentes, **caractérisé en ce qu'**un contexte de conduite est détecté et **en ce que** la seconde modalité d'émission d'informations est sélectionnée en fonction du contexte de conduite détecté.

7. Procédé selon l'une des revendications précédentes, **caractérisé en ce qu'**une modalité d'émission d'informations comprenant une émission acoustique d'informations est sélectionnée pour un type d'activité indiquant une activité visuelle.

8. Procédé selon l'une des revendications précédentes, **caractérisé en ce qu'**une modalité d'émission d'informations comprenant une émission visuelle d'informations ou une modalité d'émission d'informations comprenant une émission haptique d'informations est sélectionnée pour un type d'activité indiquant une activité acoustique.

9. Système de guidage de véhicule automobile (1) pour la conduite automatique du véhicule automobile (1),
dans lequel le système de guidage de véhicule est conçu pour mettre en oeuvre un procédé selon l'une des revendications précédentes.
